# EUROPEAN PATENT SPECIFICATION

(11) **EP 1 825 162 B1**
(45) Date of publication and mention of the grant of the patent: **09.04.2008**
(21) Application number: 04822456.2
(22) Date of filing: 24.11.2004
(51) Int. Cl.: F16D 65/02

(54) **A DIRT SCRAPER FOR A DISC BRAKE**
SCHMUTZABSTREIFER FÜR EINE SCHEIBENBREMSE
GRATTOIR DE SALETES POUR FREIN A DISQUE

(43) Date of publication of application: 29.08.2007
(73) Proprietor: VOLVO LASTVAGNAR AB, 405 08 Göteborg (SE)
(72) Inventor: BAGGE, Lars, S-413 15 Göteborg (SE); ANDERSSON, Jörgen, S-438 33 Landvetter (SE)
(74) Representative: Fröhling, Werner Otto
(86) International application number: PCT/SE2004/001736
(87) International publication number: WO 2006/057581

(56) References cited:
- EP-A1- 0 200 316
- EP-A2- 0 447 714

## Description

### TECHNICAL FIELD:

The present invention relates to a scraper for scraping dirt, such as mud, off the disc of a disc brake on a vehicle, such as a truck or car.

### BACKGROUND ART:

When driving a vehicle in a dirty and muddy field, the pads on a disc brake may be covered with dirt such as mud, which may reduce the braking effect due to lower friction force between the disc and the brake blocks. Furthermore, the disc may be worn due to the grinding provided by the debris or any other kind of material deposited on the disc, the grinding may be provided even if the brake is not applied, if it fills up the entire space between the disc and the brake blocks.

It is known to use protection shields for protecting the disc from dirt coming from outside, but these protection shields are not sufficient in cases where the vehicle drives off-road. Furthermore, these shields often comprise a heavy construction provided on the vehicle.

EP-A-0 200 316 discloses a dirt scraper according to the preamble of claim 1, which can remove dirt from the disc in any driving conditions.

It is an object of the present invention to provide a dirt scraper for a disc brake, which automatically abuts the disc surface when the disc is substantially cold and moves away from the disc when the disc heats up, in particular in an off-road driving condition in a dirty and muddy field.

### DISCLOSURE OF THE INVENTION:

The above-mentioned objects are fulfilled according to claim 1 by a dirt scraper for a disc brake of a vehicle, having
at least one scraper blade adapted to abut the braking surface of the disc for scraping off dirt when the disc rotates, the scraper being characterised in that it comprises
heat sensitive means for moving said at least one blade from a first position where it abuts said surface of the disc to a second position where it does not abut said surface of the disc, when the temperature of the heat sensitive means increases, and vice versa.

The dirt scraper is abutting the disc surface such that it scrapes off the dirt that may be deposited on the disc during driving, such as driving in muddy fields, which normally is done at a low speed, but also during driving at higher speeds on the highway.

If the vehicle is driving at a high speed and then brakes, the temperature of the disc increases due to the friction between the disc and the brake pads. The brakes will also heat up at low speeds if the vehicle is heavy and/or brakes hard. If the blades of the dirt scraper would abut the disc constantly, it would result in a significant wear of the blade(s). In order to avoid this wear of the blade(s), the dirt scraper comprises heat sensitive means connected to or integrated in the blade(s) such that a temperature increase, due to the braking, will force the sensitive means to move the blade(s) away from the disc and thereby avoid wear on the blade(s).

The heat sensitive means may be a material that expands when its temperature increases and retracts when its temperature decreases, or vice versa.

Preferably, the heat sensitive means comprises a bimetallic element comprising at least two laminated metals having different coefficient of thermal expansion. The scraper blade may form part of the bimetallic element, such that a layer of the bimetallic element is a part of the scraper. The bimetallic element is preferably positioned in closed vicinity to the disc such that a proper heat transfer is provided between the disc and the bimetallic element.

Preferably, the scraper comprises two scraper blades, one positioned on each side of the disc, but there may be more than two scraper blades per disc. Preferably, means is provided for attaching the dirt scraper to a stationary part of the vehicle.

The sensitive means is preferably adapted to move the scraper blades away from the disc, such that the distance between the disc and the blade(s) is 0.5 mm or more.

Depending on the construction of the sensitive means, the scraper blade(s) will be moved from the first to the second position when a given temperature is reached. Preferably, the blade(s) is moved when the disc temperature and/or the temperature of the sensitive means and/or the temperature of the blade(s) reaches at least 100°C, but it may be lower or higher, such as 80°C, 120°C, 130°C, 150°C or even higher.

When driving at low speed, e.g. in muddy fields, the friction provided between the blade(s) and disc does not cause any significant wear on the blade(s) and disc. However, when driving at higher speed, e.g. at the highway, the friction provided between the blade(s) and the disc will be larger and cause wear and tear on the blade(s) and disc. Therefore, it is preferred to move the blade(s) to the second position when driving at high speed.

In a first development, the scraper preferably comprises a heat generating friction element preferably with a high coefficient of heat transfer and which is adapted to abut the disc for providing a temperature increase. The friction element is preferably positioned adjacent to the sensitive means for providing a proper heat transfer to the sensitive means which then will move the blade(s) to the second position due to the heat generated by the friction between the friction element and the disc. Thus, the blade(s) can be moved away from the disc not only in a braking situation, but also in a driving situation at high speed.

Again, depending on the construction of the sensitive means and the friction element, the scraper blade(s) will be moved from the first to the second position when a given temperature is reached, due to the frictional heat provided between the friction element and the disc, when the disc rotates. Preferably, the scraper is moved to the second position when the disc rotates with a number of revolutions corresponding to a vehicle velocity of 20 km/h, but it may be more or less, such as 10 km/h, 30 km/h, 40 km/h, 50 km/h, 60 km/t or more.

In a second development, the speed of the vehicle is sensed the scraper is moved to the second position depending on the actual speed of the vehicle. This can be done by incorporating a heating element, such as an electrical resistor, in the heat sensitive means. When a predefined speed is reached, the heating element heats the heat sensitive means so that the heat sensitive means moves the scraper to the second position. The predefined speed can be the same as above.

The blade(s), the heat sensitive means and the friction element may be formed as one single integrated part, or they may be detachable from each other. The blade(s) and heat sensitive means is preferably provided as an integrated unit, and the blade(s) and friction element is preferably mounted detachable to the vehicle, so that it is easy to replace them by new ones when they are worn down.

The blade(s) may be made of any suitable wear-resistant material and preferably, the blade(s) is made of metal or a composite material, but it may also be made of a plastic material.

The friction element is preferably made of a composite material.

Preferably, the end of the blade(s) abutting the disc surface is made of a metal or rubber composition.

The blades may be positioned in front of and/or behind the axle to which the disc is mounted when seeing in the travelling direction of the vehicle.

The blades preferably extends from the axle to the periphery of the disc, and the blades may be tilted a given angle in relation to horizontal, so that the dirt will slide off the blade automatically.

According to a second aspect, the present invention relates to a disc brake for a vehicle comprising a dirt scraper according to the first aspect.

According to a third aspect, the present invention relates to a vehicle comprising a disc brake with a dirt scraper according to the first aspect. The vehicle according to the first, second and third aspect may be a car, truck, construction vehicle, bus, train, motorcycle or bicycle.

### BRIEF DESCRIPTION OF DRAWINGS:

The invention will be described in greater detail in the following, with reference to the embodiments that are shown in the attached drawings, in which
- Fig. 1: shows a disc brake with a dirt scraper according to the invention,
- Fig. 2: shows a front view of the disc brake according to fig. 1,
- Fig. 3: shows an alternative embodiment of an inventive disc brake,
- Fig. 4: shows a front view of the disc brake according to fig. 3, and
- Figs. 5 - 8: shows alternative embodiments of a dirt scraper according to the invention.

### MODES FOR CARRYING OUT THE INVENTION:

The embodiments of the invention with further developments described in the following are to be regarded only as examples and are in no way to limit the scope of the protection provided by the patent claims.

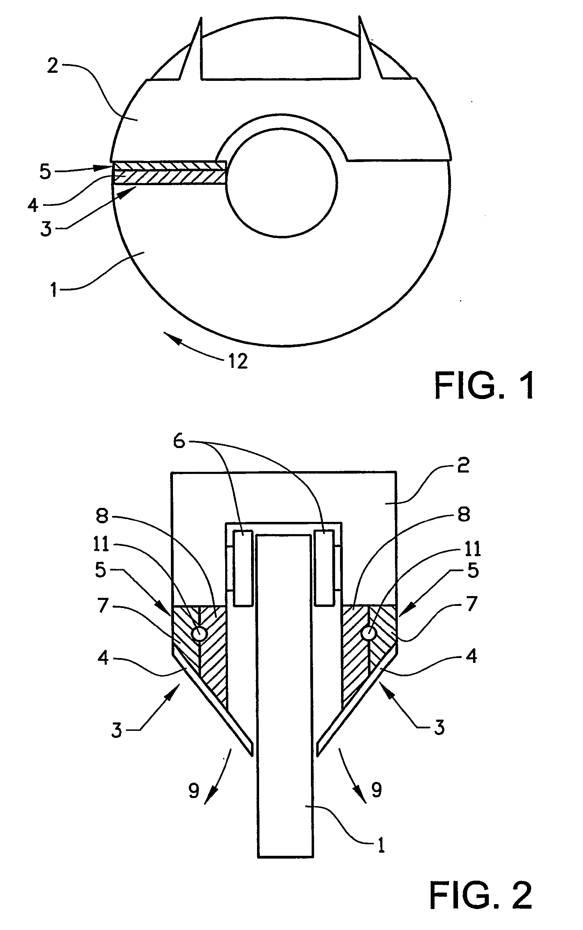

Figure 1 shows a disc brake comprising a disc 1 and a brake calliper 2. The dirt scraper 3 is attached to the vehicle (not shown) and comprises a scraper blade 4 and a heat-sensing element in the form of a bimetallic element 5. The bimetallic element is attached to the stationary brake calliper 2. The disc 1 is moving in the direction 12.

Figure 2 shows a front view of disc brake comprising a brake calliper 2 and two brake pads 6 to be pressed towards the disc 1 for obtaining a braking effect. Two dirt scrapers 3 are attached to the brake calliper 2, one on each side, and comprise a bimetallic element 5 consisting of two metals 7, 8 having different coefficient of thermal expansion and a scraper blade 4 mounted to the bimetallic element 5. The bimetallic element also comprises a heating element 11 in the form of an electrical resistor.

When the brake pads are pressed towards the disc, said disc is heated and the generated heat will heat up the bimetallic element 5, which then expands. Since the two metals 7, 8 have different coefficients of thermal expansion, the bimetallic element 5 will expand unsymmetrical. In this example, element 8 expands more than element 7. The result will be that the scraper blade 4 is pushed outwards, and thereby the scraper blade is turned away from the disc 1 in the direction 9.

In order to move the scraper blade when the disc is not warm, the heating element 11 may be activated to heat the bimetallic element 5. The activation of the heating element 11 may be conducted at different occasions, but is preferably done when the vehicle is travelling over a predetermined speed. It is also possible to activate the heating element when the vehicle is travelling outside a predefined area, e.g. when the vehicle is outside of a construction site. The heating element is in this example a resistor that is heated by an electrical current. The heating element may have a fixed resistance or may be of a self-regulating type with a built in temperature-controlling device.

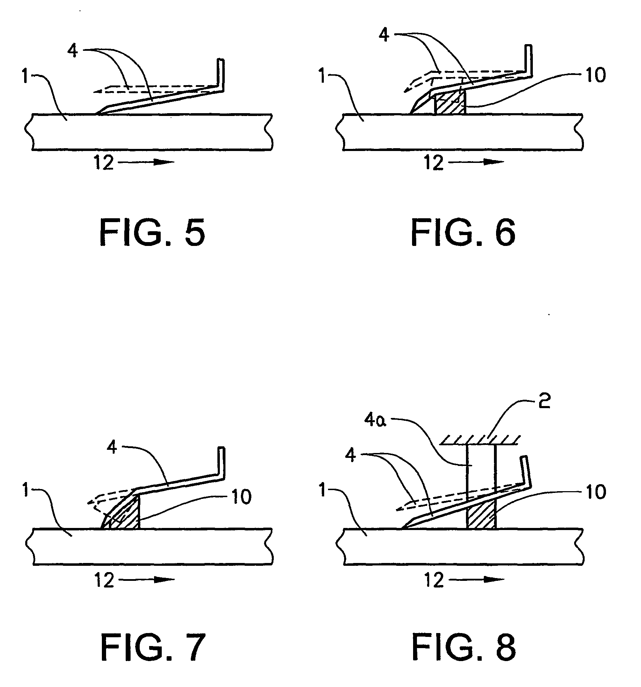

The heat for moving the scraper blade 4 may also be generated by friction provided between the scraper blade 4 and the disc 1, e.g. with a friction element as shown in fig. 6.

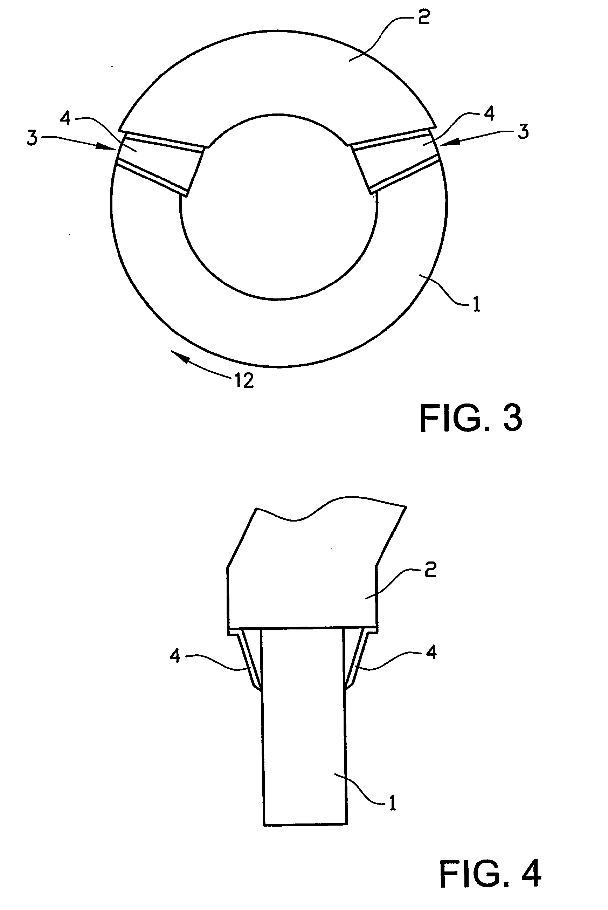

Figs. 3 and 4 show a disc brake with two dirt scrapers 3 positioned on each side of a disc 1 and mounted to a brake calliper 2. Each dirt scraper 3 comprises an angled scraper blade 4. This embodiment is advantageous for a construction vehicle, since the dirt scrapers will remove dirt also when the vehicle is moving backwards. The disc is moving ion the direction 12.

Figs. 5-8 shows different embodiment of the dirt scraper according to the invention. In fig. 5 is shown a dirt scraper comprising a scraper blade 4 that can move between a first position where it abuts the disc 1 and a second position where it does not abut the disc 1, the disc rotating in the direction 12. The scraper blade 4 is here integrated with the heat sensitive means, preferably a bimetallic element, which actuates the movement of the blade when heat is generated in the disc.

The dirt scraper of fig. 6 further comprises a heat generating friction element 10 provided on the scraper blade 4. The element 10 abuts the disc 1 for generating frictional heat to be transferred to the bimetallic element integrated in the scraper blade 4 for moving the blade away from the disc 1. In this embodiment, the entire scraper blade 4 is moved.

The dirt scraper of fig. 7 is almost identical to the one of fig. 6 despite that it is only the tip of the scraper blade 4 that is moved, as the bimetallic element is provided therein. The friction element 10 is provided on the tip of the blade 4.

In the dirt scraper of fig. 8, a bimetallic element 4a is provided between a stationary part 2 of the vehicle and the scraper blade 4, which may be made of spring steel. The heat generating friction element 10 is positioned opposite to the bimetallic element between the blade 4 and the disc for generating heat to the bimetallic element, so as to lift the blade away from the disc.

The invention is not to be regarded as being limited to the embodiments described above, a number of additional variants and modifications being possible within the scope of the subsequent patent claims. The scraper can also be used for other rotating members where a selective scraping action is desirable.

## Claims

1. A dirt scraper (13) for a disc brake of a vehicle, having
at least one scraper blade (4) adapted to abut a braking surface of the disc for scraping off dirt when the disc rotates, the scraper being **characterised in that** it comprises
heat sensitive means (5) for moving said at least one blade (4) from a first position where it abuts said surface of the disc to a second position where it does not abut said surface of the disc, when the temperature of the heat sensitive means increases, and vice versa.

2. A scraper according to claim 1, wherein the heat sensitive means comprises a material that expands when its temperature increases and retract when its temperature decreases, or vice versa.

3. A scraper according to claim 1 or 2, wherein the heat sensitive means comprises a bimetallic element comprising at least two laminated metals having different coefficient of thermal expansion.

4. A scraper according to claim 3, wherein the scraper blade forms part of at least one of the two laminated metals.

5. A scraper according to any of claims 1-4, wherein the scraper comprises two scraper blades, one positioned on each side of the disc.

6. A scraper according to any of claims 1-5, wherein the distance between the disc and the blade(s), when the blade(s) is in its second position, is 0.5 mm or more.

7. A scraper according to any of claims 1-6, wherein the blade(s) are moved away from the disc when the temperature of the sensitive means reaches 30°C or reaches 50°C or reaches 60°C or reaches 70°C or reaches 100°C or reaches 120°C or reaches 130°C or reaches 150°C or reaches an even higher temperature.

8. A scraper according to any of claims 1-7, wherein the scraper comprises a friction element adapted to abut the surface of the disc for generating heat for providing the temperature increase when the disc rotates.

9. A scraper according to any of claims 1-8, wherein the scraper is adapted to move away from the disc when the disc rotates with a number of revolutions corresponding to a vehicle velocity of minimum 20 km/h.

10. A scraper according to any of claims 8-9, wherein the friction element is made of a composite material.

11. A scraper according to any of claims 1-7, wherein the scraper comprises a heating element (11) adapted to heat the heat sensitive element (5).

12. A scraper according to claim 11, wherein the scraper is adapted to move away from the disc when the vehicle velocity is greater than a predetermined value.

13. A scraper according to any of claims 1-12, wherein the blade(s) are made of metal and/or plastic material and/or a composite material.

14. A scraper according to any of claims 1-13, wherein at least the end of the blade(s) abutting the disc surface is made of rubber.

15. A scraper according to any of claims 1-14, wherein the blades are positioned in front of and/or behind the axle to which the disc is mounted when seeing in the travelling direction of the vehicle.

16. A scraper according to any of claims 1-15, and further comprising means for attaching the dirt scraper to a stationary part of the vehicle.

17. A disc brake for a vehicle comprising a dirt scraper according to any of claims 1-16.

18. A vehicle comprising a disc brake with a dirt scraper according to any of claims 1-16.

19. A vehicle according to claim 18, wherein the vehicle is a car or truck or construction vehicle or bus or train or motorcycle.

## Patentansprüche

1. Schmutzabkratzer (13) für eine Scheibenbremse eines Fahrzeugs, der wenigstens eine Abkratzklinge (4) hat, die so angepasst ist, dass sie an einer Bremsfläche der Scheibe zum Abkratzen von Schmutz anliegt, wenn sich die Scheibe dreht, **dadurch gekennzeichnet, dass** der Abkratzer eine wärmeempfindliche Einrichtung (5) zum Bewegen der wenigstens einen Klinge (4) aus einer ersten Position, in der sie an der Oberfläche der Scheibe anliegt, zu einer zweiten Position, in der sie nicht an der Oberfläche der Scheibe anliegt, wenn die Temperatur der wärmeempfindlichen Einrichtung zunimmt und umgekehrt.

2. Abkratzer nach Anspruch 1, bei welchem die wärmeempfindliche Einrichtung ein Material aufweist, das sich ausdehnt, wenn seine Temperatur zunimmt, und das sich zusammenzieht, wenn seine Temperatur abnimmt, oder umgekehrt.

3. Abkratzer nach Anspruch 1 oder 2, bei welchem die wärmeempfindliche Einrichtung ein Bimetallelement mit wenigstens zwei laminierten Metallen aufweist, die unterschiedliche Wärmeausdehnungskoeffizienten haben.

4. Abkratzer nach Anspruch 3, bei welchem die Abkratzklinge einen Teil wenigstens eines der zwei laminierten Metalle bildet.

5. Abkratzer nach einem der Ansprüche 1 bis 4, welcher zwei Abkratzklingen aufweist, von denen eine auf jeder Seite der Scheibe angeordnet ist.

6. Abkratzer nach einem der Ansprühe 1 bis 5, bei welchem der Abstand zwischen der Scheibe und der Klinge/den Klingen, wenn sie sich in ihrer zweiten Position befindet/befinden, 0,5 mm oder mehr beträgt.

7. Abkratzer nach einem der Ansprüche 1 bis 6, bei welchem die Klinge/die Klingen von der Scheibe wegbewegt werden, wenn die Temperatur der wärmeempfindlichen Einrichtung 30°C oder 50°C oder 60°C oder 70°C oder 100°C oder 120°C oder 130°C oder 150°C oder eine noch höhere Temperatur erreicht.

8. Abkratzer nach einem der Ansprüche 1 bis 7, welcher ein Reibungselement aufweist, das so angepasst ist, dass es an der Oberfläche der Scheibe zur Wärmeerzeugung anliegt, um für den Temperaturanstieg zu sorgen, wenn sich die Scheibe dreht.

9. Abkratzer nach einem der Ansprüche 1 bis 8, welcher so angepasst ist, dass er sich von der Scheibe weg bewegt, wenn sich die Scheibe mit einer Drehzahl dreht, die einer Fahrzeuggeschwindigkeit von minimal 20 km/h entspricht.

10. Abkratzer nach Anspruch 8 oder 9, bei welchem das Reibungselement aus einem Verbundmaterial hergestellt ist.

11. Abkratzer nach einem der Ansprüche 1 bis 7, welcher ein Heizelement (11) aufweist, das so angepasst ist, dass es das wärmeempfindliche Element (5) erwärmt.

12. Abkratzer nach Anspruch 11, der so angepasst ist, dass er sich von der Scheibe wegbewegt, wenn die Fahrzeuggeschwindigkeit größer als ein vorgegebener Wert ist.

13. Abkratzer nach einem der Ansprüche 1 bis 12, bei welchem die Klinge/die Klingen aus Metall und/oder Kunststoff und/oder einem Verbundmaterial hergestellt ist/sind.

14. Abkratzer nach einem der Ansprüche 1 bis 13, bei welchem wenigstens das Ende der Klinge/ der Klingen, das an der Scheibenoberfläche anliegt, aus Kautschuk hergestellt ist.

15. Abkratzer nach einem der Ansprüche 1 bis 14, bei welchem die Klingen gesehen in Fahrtrichtung des Fahrzeugs vor und/oder hinter der Achse angeordnet sind, auf der die Scheibe angebracht ist.

16. Abkratzer nach einem der Ansprüche 1 bis 15, der weiterhin Einrichtungen zum Befestigen des Schmutzabkratzers an einem stationären Teil des Fahrzeugs aufweist.

17. Bremsscheibe für ein Fahrzeug mit einem Schmutzabkratzer nach einem der Ansprüche 1 bis 16.

18. Fahrzeug mit einer Bremsscheibe mit einem Schmutzabkratzer nach einem der Ansprüche 1 bis 16.

19. Fahrzeug nach Anspruch 18, wobei das Fahrzeug ein PKW oder ein LKW oder ein Baufahrzeug oder ein Bus oder ein Zug oder ein Motorrad ist.

## Revendications

1. Racleur de poussières (13) pour un frein à disque d'un véhicule ayant au moins une lame de racleur (4) adaptée pour venir en butée contre une surface de freinage du disque pour enlever des poussières par raclage lorsque le disque tourne, le racleur étant **caractérisé en ce qu'**il comporte des moyens thermosensibles (5) pour déplacer ladite au moins une lame (4) depuis une première position où elle vient en butée contre ladite surface du disque jusqu'à une seconde position où elle ne vient pas en butée contre ladite surface du disque, lorsque la température des moyens thermosensibles augmente, et vice versa.

2. Racleur selon la revendication 1, dans lequel les moyens thermosensibles comportent un matériau qui se dilate lorsque sa température augmente et se rétracte lorsque sa température diminue, ou vice versa.

3. Racleur selon la revendication 1 ou 2, dans lequel les moyens thermosensibles comportent un élément bimétallique comportant au moins deux métaux laminés ayant différents coefficients de dilatation thermique.

4. Racleur selon la revendication 3, dans lequel la lame de racleur forme une partie d'au moins un des deux métaux laminés.

5. Racleur selon l'une quelconque des revendications 1 à 4, dans lequel le racleur comporte deux lames de racleur, une positionnée de chaque côté du disque.

6. Racleur selon l'une quelconque des revendications 1 à 5, dans lequel la distance entre le disque et la (les) lame(s), lorsque la (les) lame(s) est (sont) dans sa (leur) seconde position, est de 0,5 mm ou plus.

7. Racleur selon l'une quelconque des revendications 1 à 6, dans lequel la (les) lame(s) est (sont) écartée(s) du disque lorsque la température des moyens thermosensibles atteint 30 °C ou atteint 50 °C ou atteint 60 °C ou atteint 70 °C ou atteint 100 °C ou atteint 120 °C ou atteint 130 °C ou atteint 150 °C ou atteint une température encore plus élevée.

8. Racleur selon l'une quelconque des revendications 1 à 7, dans lequel le racleur comporte un élément de friction adapté pour venir en butée contre la surface du disque pour produire de la chaleur pour créer l'augmentation de température lorsque le disque tourne.

9. Racleur selon l'une quelconque des revendications 1 à 8, dans lequel le racleur est adapté pour s'écarter du disque lorsque le disque tourne avec un nombre de tours correspondant à une vitesse de véhicule minimale de 20 km/h.

10. Racleur selon l'une quelconque des revendications 8 à 9, dans lequel l'élément de friction est constitué d'un matériau composite.

11. Racleur selon l'une quelconque des revendications 1 à 7, dans lequel le racleur comporte un élément de chauffage (11) adapté pour chauffer l'élément thermosensible (5).

12. Racleur selon la revendication 11, dans lequel le racleur est adapté pour s'écarter du disque lorsque la vitesse du véhicule est supérieure à une valeur prédéterminée.

13. Racleur selon l'une quelconque des revendications 1 à 12, dans lequel la (les) lame(s) est (sont) constituée(s) de métal et/ou de matière plastique et/ou d'un matériau composite.

14. Racleur selon l'une quelconque des revendications 1 à 13, dans lequel au moins l'extrémité de la (des) lame(s) en butée contre la surface de disque est constituée de caoutchouc.

15. Racleur selon l'une quelconque des revendications 1 à 14, dans lequel les lames sont positionnées devant et/ou derrière l'essieu sur lequel le disque est monté, en observant dans la direction de déplacement du véhicule.

16. Racleur selon l'une quelconque des revendications 1 à 15, et comportant également des moyens pour fixer le racleur de poussières sur une partie statique du véhicule.

17. Frein à disque pour un véhicule comportant un racleur de poussières selon l'une quelconque des revendications 1 à 16.

18. Véhicule comportant un frein à disque ayant un racleur de poussières selon l'une quelconque des revendications 1 à 16.

19. Véhicule selon la revendication 18, dans lequel le véhicule est une voiture ou un camion ou un véhicule de construction ou un bus ou un train ou une motocyclette.
